# EUROPEAN PATENT APPLICATION

(11) **EP 4 506 881 A1**
(43) Date of publication of application: **12.02.2025**
(21) Application number: 23794731.2
(22) Date of filing: 24.02.2023
(51) Int. Cl.: G06T 1/20, G06N 20/00, G06F 9/50

(54) **DATA PROCESSING METHOD, DATA PROCESSING UNIT, SYSTEM AND RELATED DEVICE**

(30) Priority: 29.04.2022 CN 202210473780; 04.08.2022 CN 202210934646
(71) Applicant: Huawei Technologies Co., Ltd., Shenzhen, Guangdong 518129 (CN)
(72) Inventor: LUO, Xianqiang, Shenzhen, Guangdong 518129 (CN)
(74) Representative: Epping - Hermann - Fischer
(86) International application number: PCT/CN2023/078189
(87) International publication number: WO 2023/207295

(57) **Abstract**

A data processing method is provided. A DPU performs an operation in an image operation set on obtained image data to obtain model training data, where the image processing operation set includes at least an image decoding operation, so that the DPU outputs the model training data to a model training processor. The model training data is used by the model training processor to perform an operation in a training operation set. Alternatively, the DPU outputs model training data to a CPU. The model training data is used by the CPU and the model training processor to perform the operation in the training operation set, and the training operation set includes at least a model training operation. In this way, the DPU is used to perform operations such as image decoding on the image data, so that training efficiency of an AI model can be improved by accelerating data processing, and the training efficiency of the AI model can be improved by reducing occupation of limited memory space of the model training processor.

## Description

This application claims priorities to Chinese Patent Application No. 202210473780.6, filed with the China National Intellectual Property Administration on April 29, 2022, and entitled "FILE SYSTEM ACCESS METHOD AND APPARATUS", and to Chinese Patent Application No. 202210934646.1, filed with the China National Intellectual Property Administration on August 4, 2022, and entitled "DATA PROCESSING METHOD, DATA PROCESSING UNIT, SYSTEM, AND RELATED DEVICE", both of which are incorporated herein by reference in their entireties.

### TECHNICAL FIELD

This application relates to the field of data processing technologies, and in particular, to a data processing method, a data processing unit, a system, and a related device.

### BACKGROUND

Currently, a model training processor may be usually configured in a compute node, and a model training service on the compute node is processed by using the model training processor, to offload computing load of a central processing unit (CPU) in the compute node and improve computing performance of the compute node. For example, a graphics processing unit (graphics processing unit, GPU) may be configured in the compute node. The GPU may be configured to train an artificial intelligence (artificial intelligence, AI) model provided by the CPU, and the like. However, during actual application, the model training service on the compute node may have a high requirement on a service processing delay. As a result, model training efficiency of the model training processor may be difficult to meet requirements of some application scenarios.

### SUMMARY

A data processing method, a data processing unit, a system, a storage medium, and a computer program product are provided, to improve training efficiency of an AI model on a compute node, so as to meet a low delay requirement of some model training services in an actual application scenario.

According to a first aspect, an embodiment of this application provides a data processing method. The data processing method is performed by a DPU. The DPU is separately coupled to a CPU and a model training processor through a system bus, or the DPU and the model training processor are different chips on one training card. The training card and the CPU can perform data communication on the training card. When performing data processing, the DPU obtains image data. The image data includes a plurality of encoded images. Then, the DPU performs an operation in an image processing operation set on the image data to obtain model training data. Operations of processing the image data include an operation in the image processing operation set performed by the DPU and an operation in a training operation set performed by a non-DPU. In addition, the image processing operation set includes at least an image decoding operation, and the training operation set includes at least a model training operation. Therefore, the DPU outputs the model training data to the model training processor. The model training data is used by the model training processor to perform the operation in the training operation set. Alternatively, the DPU outputs the model training data to the CPU. The model training data is used by the CPU and the model training processor to perform the operation in the training operation set.

Usually, the model training processor is mainly good at performing the model training operation in the training operation set. Therefore, a speed of performing image decoding (and performing another operation) on the image data by using the DPU is faster than a speed of performing the image decoding (and performing the another operation) by using the model training processor. Therefore, the DPU can be used to improve efficiency of processing a model training service and accelerate training of an AI model. In addition, the DPU is used to perform operations such as the image decoding on the image data, to reduce occupation of limited memory space of the model training processor by temporary data generated in a process of training the AI model, so that the model training processor can have abundant memory space to train the AI model. Therefore, training efficiency of the AI model can also be improved.

In the AI training, the model training processor (for example, a GPU) usually needs to perform a plurality of operations on the image data. The plurality of operations form a set. In this solution, the set is divided into a plurality of subsets, and one of the subsets is offloaded to the DPU for execution. A remaining subset is performed by the model training processor, or is jointly performed by the model training processor and the CPU. In this way, resource occupation of the model training processor can be reduced, and resources of the model training processor are mainly used for model training, instead of being occupied by the operations such as the image decoding. In addition, a location of the DPU is usually closer to a user. User data first passes through the DPU (for example, a DPU integrated with a network function), and arrives at the model training processor after being processed by the DPU. In this way, computing load of the model training processor can be reduced, so that the model training processor can have more computing power to accelerate the training of the AI model.

In an implementation, an operation offloaded to the DPU is an operation that the DPU is better at than the model training processor. To be specific, when the DPU and the model training processor perform a same operation, the DPU is more efficient than the model training processor, the DPU consumes less power than the model training processor, or the DPU occupies less time than the model training processor.

In a possible implementation, the DPU includes a network interface. Therefore, when obtaining the image data, the DPU may specifically obtain, through the network interface and via a wired network or a wireless network, the image data used for training an AI model. In this way, access to a remote storage device may be supported to obtain the image data, so that the training of the AI model can be accelerated in a cloud scenario.

In a possible implementation, when the DPU obtains the image data in the storage device via the wired network, the wired network may be specifically an Ethernet or a wireless bandwidth network. In a possible implementation, the DPU may be connected to the storage device, so that the DPU may obtain the image data from the storage device based on the connection. In this way, the training of the AI model can be accelerated locally.

In a possible implementation, the storage device may be, for example, one or more of a hard disk drive HDD, a flash memory drive, a stacked magnetic recording SMR, a storage array, and a storage server, or may be implemented in another manner during actual application.

Optionally, the storage device may be, for example, a volatile memory or a non-volatile memory. In a possible implementation, when the storage device is connected to the DPU, a communication protocol between the storage device and the DPU may include one or more of a small computer system interface SCSI protocol, a serial attached small computer system interface SAS protocol, a peripheral component interconnect express PCIe protocol, a universal serial bus USB protocol, and a non-volatile memory express NVMe protocol. In this case, the DPU may implement data communication with the storage device based on any one or more communication protocols.

In a possible implementation, the DPU, the CPU, and the model training processor are located on a same server.

Optionally, the DPU and the model training processor may be located on different servers, so that a service of accelerating the training of the AI model can be provided for a remote model training processor.

In a possible implementation, the model training processor is one or more of a graphics processing unit GPU, a neural network processing unit NPU, and a tensor processing unit TPU.

In a possible implementation, the system bus configured to couple the DPU to the CPU and the model training processor or the system bus configured to couple the CPU to the training card may include one or more of a peripheral component interconnect express PCIe bus, a compute express link CXL bus, and a non-volatile memory express NVMe bus.

In a possible implementation, the image processing operation set further includes an image data transformation operation. The image data change operation may be, for example, one or more of a center crop operation, a resize operation, a data enhancement operation, and a normalization operation, or may be another type of operation. Therefore, when performing the operation in the image processing operation set, the DPU may first perform the image decoding operation on the image data to obtain matrix data, and perform the image data transformation operation on the matrix data to obtain the model training data that is output to the CPU or output to the model training processor.

In a possible implementation, the training operation set further includes an image data transformation operation. In this case, the model training data is used by the CPU to perform the image data transformation operation to obtain temporary data. The temporary data is used by the model training processor to perform the model training operation. To be specific, after performing the image decoding operation on the image data, the DPU outputs the obtained model training data to the CPU. The CPU performs the image data transformation operation on the model training data, and outputs the obtained temporary data to the model training processor. The model training processor uses the temporary data to train the AI model. In this way, computing power of the DPU and the CPU can be used to further accelerate the training of the AI model.

In a possible implementation, after training an obtained AI model, the model training processor may output the AI model to the DPU, so that the DPU may send the AI model to a local or remote storage device. The AI model may be stored in the storage device in a file format or a key-value KV format. In this way, the AI model can be stored locally or in the cloud.

In a possible implementation, the DPU may specifically output the model training data to another DPU. The another DPU is separately coupled to another CPU and another model training processor through a system bus, or the another DPU and the another model training processors are different chips on one training card. In this way, after receiving the model training data, the another DPU may output the model training data to the another model training processor. The model training data is used by the another model training processor to perform the operation in the training operation set. In this way, the DPU can be used to accelerate the training of the AI model. In addition, the model training data obtained by the DPU through processing may be shared with the another DPU, so that the another DPU can accelerate model training of the another model training processor based on the model training data obtained through sharing.

According to a second aspect, an embodiment of this application further provides a data processing method. The data processing method is performed by a DPU. The DPU is separately coupled to a CPU and a plurality of model training processors through a system bus, or the DPU and the plurality of model training processors are different chips on one training card. In this case, when performing data processing, the DPU obtains image data. The image data includes a plurality of encoded images. Then, the DPU performs an operation in an image processing operation set on the image data to obtain model training data. Operations of processing the image data include the operation in the image processing operation set and an operation in a training operation set. The image processing operation set includes at least an image decoding operation, and the training operation set includes at least a model training operation. Therefore, the DPU writes the model training data into a shared cache that is accessed by the plurality of model training processors. The model training data in the shared cache is used by the plurality of model training processors to perform the operation in the training operation set, or the model training data in the shared cache is used by the CPU and the plurality of model training processors to perform the operation in the training operation set.

A speed of performing image decoding (and performing another operation) on the image data by the DPU is faster than a speed of performing the image decoding (and performing the another operation) by the model training processor. Therefore, the DPU can be used to improve efficiency of processing a model training service and accelerate training of an AI model. In addition, the DPU is used to perform operations such as the image decoding on the image data, to reduce occupation of limited memory space of the plurality of model training processors by temporary data generated in a process of training the AI model, so that the plurality of model training processors can have abundant memory space to train the AI model. Therefore, training efficiency of the AI model can also be improved for the plurality of model training processors.

According to a third aspect, an embodiment of this application further provides a data processing method. The data processing method is performed by a target DPU. The target DPU is separately coupled to a CPU and a model training processor through a system bus, or the target DPU and the model training processor are different chips on one training card. In this case, when performing data processing, the target DPU obtains image data. The image data includes a plurality of encoded images. Then, the target DPU performs an operation in an image processing operation set on the image data to obtain model training data. Operations of processing the image data include the operation in the image processing operation set and an operation in a training operation set. The image processing operation set includes at least an image decoding operation, and the training operation set includes at least a model training operation. Therefore, the target DPU writes the model training data into a shared cache pool that is constructed based on caches in a plurality of DPUs. The plurality of DPUs include the target DPU. The model training data in the shared cache pool is used by the model training processor to perform the operation in the training operation set, or the model training data in the shared cache pool is used by the CPU and the model training processor to perform the operation in the training operation set.

A speed of performing image decoding (and performing another operation) on the image data by using one or more DPUs is faster than a speed of performing the image decoding (and performing the another operation) by the model training processor. Therefore, the one or more DPUs can be used to improve efficiency of processing a model training service and accelerate training of an AI model. In addition, the one or more DPUs are used to perform operations such as the image decoding on the image data, to reduce occupation of limited memory space of the model training processor by temporary data generated in a process of training the AI model, so that the model training processor can have abundant memory space to train the AI model. Therefore, training efficiency of the AI model can also be improved for the model training processor.

According to a fourth aspect, an embodiment of this application provides a first data processing unit DPU. The first DPU is separately coupled to a first CPU and a first model training processor through a system bus, or the first DPU and the model training processor are different chips on one training card. The DPU includes: a communication interface, configured to obtain image data, where the image data includes a plurality of encoded images; a processing chip, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and an output interface circuit, configured to output the model training data, where the model training data is used by the first model training processor to perform the operation in the training operation set, or the model training data is used by the first CPU and the first model training processor to perform the operation in the training operation set.

In a possible implementation, the image processing operation set further includes an image data transformation operation. The processing chip is configured to: perform the image decoding operation on the image data to obtain matrix data; and perform the image data transformation operation on the matrix data to obtain the model training data.

In a possible implementation, the training operation set further includes the image data transformation operation. The model training data is used by the first CPU to perform the image data transformation operation to obtain temporary data, and the temporary data is used by the first model training processor to perform the model training operation.

In a possible implementation, the communication interface is configured to: obtain an artificial intelligence AI model output by the first model training processor; and send the AI model to a local or remote storage device, where the AI model is stored in the storage device in a file format or a key-value KV format.

In a possible implementation, the output interface circuit is further configured to output the model training data to a second DPU. The second DPU is separately coupled to a second CPU and a second model training processor through a system bus, or the second DPU and the second model training processor are different chips on one training card. The second DPU is configured to: receive the model training data; and output the model training data to the second model training processor, where the model training data is used by the second model training processor to perform the operation in the training operation set.

The DPU provided in the fourth aspect corresponds to the data processing method provided in the first aspect. Therefore, for technical effects of the fourth aspect and the implementations of the fourth aspect, refer to technical effects of the corresponding first aspect and the implementations of the first aspect. Details are not described herein again.

According to a fifth aspect, an embodiment of this application provides a data processing unit DPU. The DPU is separately coupled to a central processing unit CPU and a plurality of model training processors through a system bus, or the DPU and the plurality of model training processors are different chips on one training card. The data processing apparatus includes: a communication interface, configured to obtain image data, where the image data includes a plurality of encoded images; a processing chip, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and a data read/write interface, configured to write the model training data into a shared cache that is accessed by the plurality of model training processors, where the model training data in the shared cache is used by the plurality of model training processors to perform the operation in the training operation set, or the model training data in the shared cache is used by the CPU and the plurality of model training processors to perform the operation in the training operation set.

The DPU provided in the fifth aspect corresponds to the data processing method provided in the second aspect. Therefore, for technical effects of the implementations of the fifth aspect, refer to technical effects of the implementations of the corresponding second aspect. Details are not described herein again.

According to a sixth aspect, an embodiment of this application provides a target data processing unit DPU. The target DPU is separately coupled to a central processing unit CPU and a model training processor through a system bus, or the target DPU and the model training processor are different chips on one training card. The target DPU includes: a communication interface, configured to obtain image data, where the image data includes a plurality of encoded images; a processing chip, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and a data read/write interface, configured to write the model training data into a shared cache pool that is constructed based on caches in a plurality of DPUs, where the plurality of DPUs include the target DPU, and the model training data in the shared cache pool is used by the model training processor to perform the operation in the training operation set, or the model training data in the shared cache pool is used by the CPU and the model training processor to perform the operation in the training operation set. The target DPU provided in the sixth aspect corresponds to the data processing method provided in the third aspect. Therefore, for technical effects of the implementations of the sixth aspect, refer to technical effects of the implementations of the corresponding third aspect. Details are not described herein again.

According to a seventh aspect, an embodiment of this application provides a DPU. The DPU is configured to perform the data processing method performed by the DPU according to any one of the implementations of the first aspect to the third aspect.

According to an eighth aspect, an embodiment of this application provides a data processing system. The data processing system includes the DPU according to any one of the implementations of the first aspect to the third aspect, a CPU, and a model training processor.

According to a ninth aspect, an embodiment of this application provides a chip system. The chip system includes a power supply circuit and a processing circuit. The power supply circuit is configured to supply power to the processing circuit. The processing circuit is configured to perform the data processing method performed by the DPU according to any one of the implementations of the first aspect to the third aspect.

The power supply circuit and the processing circuit may be located in a same chip, or the power supply circuit may be located in another chip other than a chip in which the processing circuit is located. The power supply circuit includes but is not limited to at least one of the following: a power supply subsystem, an electrical tube management chip, a power consumption management processor, or a power consumption management control circuit.

According to a tenth aspect, an embodiment of this application further provides a computer-readable storage medium. The computer-readable storage medium stores a program or instructions. When the program or the instructions are run on a computer, the data processing method according to any one of the implementations of the first aspect to the third aspect is performed.

According to an eleventh aspect, an embodiment of this application further provides a computer program product including instructions. When the computer program product runs on a computer, the computer is enabled to perform the data processing method according to any one of the implementations of the first aspect to the third aspect.

In addition, for technical effects brought by any one of the implementations of the fourth aspect to the eleventh aspect, refer to technical effects brought by different implementations of the first aspect to the third aspect. Details are not described herein again.

### BRIEF DESCRIPTION OF DRAWINGS

To describe technical solutions in embodiments of this application more clearly, the following briefly introduces accompanying drawings used for describing embodiments. It is clear that the accompanying drawings in the following descriptions show merely some embodiments recorded in this application, and a person of ordinary skill in the art may still derive other drawings from these accompanying drawings.
FIG. 1a is a schematic diagram of a structure of an example data processing system according to an embodiment of this application;
FIG. 1b is a schematic diagram of a structure of another example data processing system according to an embodiment of this application;
FIG. 2 is a schematic flowchart of a data processing method according to an embodiment of this application;
FIG. 3 is a schematic flowchart of another data processing method according to an embodiment of this application;
FIG. 4 is a schematic diagram of a structure of another data processing system according to an embodiment of this application;
FIG. 5 is a schematic diagram of a structure of still another data processing system according to an embodiment of this application;
FIG. 6 is a schematic flowchart of still another data processing method according to an embodiment of this application;
FIG. 7 is a schematic diagram of a structure of still another data processing system according to an embodiment of this application;
FIG. 8 is a schematic diagram of a structure of yet another data processing system according to an embodiment of this application;
FIG. 9 is a schematic diagram of a structure of a DPU according to an embodiment of this application;
FIG. 10 is a schematic diagram of a structure of another DPU according to an embodiment of this application;
FIG. 11 is a schematic diagram of a hardware structure of a DPU according to an embodiment of this application; and
FIG. 12 is a schematic diagram of a structure of a chip system according to an embodiment of this application.

### DESCRIPTION OF EMBODIMENTS

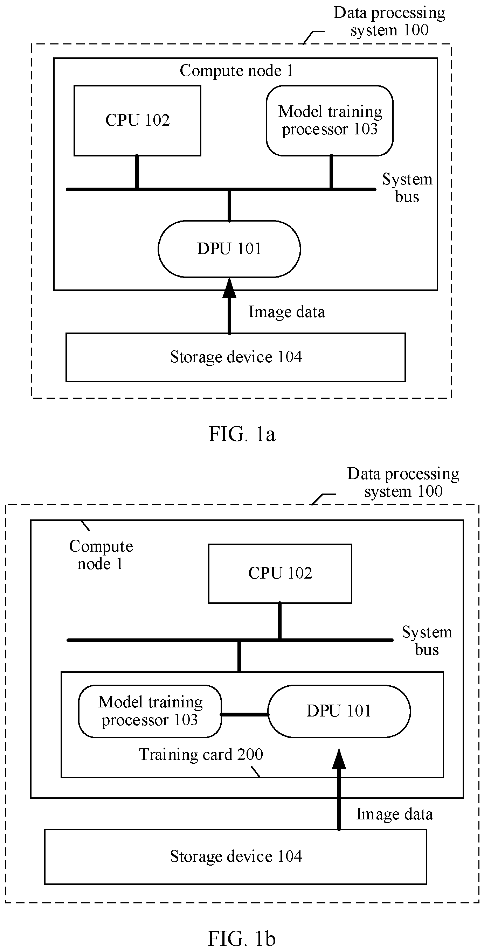

FIG. 1a is a schematic diagram of a structure of an example data processing system. As shown in FIG. 1a, the data processing system 100 may include a data processing unit (data processing unit, DPU) 101, a CPU 102, and a model training processor 103. The DPU 101 may be coupled to the CPU 102 and the model training processor 103 through a system bus. The system bus is configured to connect components inside a computer, and may be, for example, one or more of a peripheral component interconnect express (peripheral component interconnect express, PCIE) bus, a compute express link (compute express link, CXL) bus, and a non-volatile memory express (non-volatile memory express, NVMe) bus, or may be another possible bus. This is not limited in this application. The DPU is a card, and may be inserted into a mainboard (for example, a server mainboard) through a slot of the PCIe interface or of another interface. The DPU and the model training processor (for example, a GPU) may be integrated on a same card, or may be independent cards.

The DPU has a network interface such as a 100GB Ethernet interface or an infiniband interface. The DPU may further have a function of accessing a local storage medium of a computer node, for example, accessing a solid-state drive (SSD) by using a PCIe protocol.

The DPU 101, the CPU 102, and the model training processor 103 may be deployed on a same compute node, for example, a compute node 1 shown in FIG. 1a. For example, the compute node 1 may be a terminal, a server, another device having a computing capability, or the like. In another implementation, the DPU 101, the CPU 102, and the model training processor 103 may alternatively be deployed on different compute nodes. For example, the DPU 101 is deployed on a compute node, and the CPU 102 and the model training processor 103 are deployed on another compute node.

In some examples, the model training processor 103 may be, for example, any one or more of the GPU, a neural network processing unit (neural-network processing unit, NPU), and a tensor processing unit (tensor processing unit, TPU), or may be another type of processor.

Further, the data processing system 100 may further include a storage device 104. In addition, the compute node 1 communicates with the storage device 104 via the DPU 101, as shown in FIG. 1a. Specifically, the compute node 1 accesses the storage device 104 via the DPU 101. For example, the compute node 1 reads, via the DPU 101, image data that is used for model training and that is stored in the storage device 104, or sends, via the DPU 101, a trained model to the storage device 104 for storage.

The DPU 101 may be connected to the storage device 104. For example, a connection is established through an interface or a bus. For example, a communication protocol between the storage device 104 and the DPU 101 includes one or more of a small computer system interface (small computer system interface, SCSI) protocol, a serial attached small computer system interface (serial attached small computer system interface, SAS) protocol, a PCIe protocol, a universal serial bus (universal serial bus, USB) protocol (for example, USB 3.0 or USB 2.0), and an NVMe protocol, or may be another applicable communication protocol.

Alternatively, the DPU 101 may include a network interface, so that the DPU 101 may communicate with the storage device 104 through the network interface based on a wired network or a wireless network. In some examples, when the DPU 101 communicates with the storage device 104 based on the wired network, the wired network may be, for example, an Ethernet or an infiniband (infiniband).

The storage device 104 may be, for example, one or more of a hard disk drive (hard disk drive, HDD), a flash memory drive, shingled magnetic recording (shingled magnetic recording, SMR), a storage array, and a storage server. Alternatively, based on types of storage devices, the storage device 104 may be a non-volatile memory (non-volatile memory, NVM), for example, a read-only memory (read-only memory, ROM), a flash memory (flash memory), or a storage class memory (storage class memory, SCM). Alternatively, the storage device 104 may be a volatile memory (volatile memory), for example, a random access memory (random access memory, RAM). It should be noted that the storage device 104 shown in FIG. 1a may be a set of one or more devices that can provide a storage service. For ease of description, the storage device 104 is used herein for representation.

In the data processing system 100 shown in FIG. 1a, the CPU 102 may indicate the model training processor 103 to train one or more AI models on the compute node 1, for example, indicate the model training processor 103 to train a target recognition model, a face detection model, and the like.

Processing of a model training service on the compute node 1 is used as an example. If only single computing power of the model training processor 103 is used to perform all steps required for processing the model training service, because the computing power of the model training processor 103 is limited, time required by the model training processor 103 to complete training of the AI model may be excessively long. Consequently, training efficiency of the AI model is low. For example, assuming that the model training processor 103 is specifically the GPU, the GPU may access image data that is stored in the storage device 104 and that is used as a training sample, and store the accessed image data to a local memory. Then, operations such as decoding, image data transformation (for example, data enhancement), and AI model training are performed on the image data in the local memory, and temporary data generated when these operations are performed is stored in the local memory. Because memory space of the GPU is limited, it is difficult to store temporary data generated when the GPU processes all image data. Consequently, a batch size (batch size) for iterative training of the AI model is small. In addition, in a process of a plurality of rounds of iterative training of the AI model, the GPU needs to repeatedly read and decode a same training dataset in the storage device 104 a plurality of times. As a result, time consumed for iterative training of the AI model by the GPU is increased, and efficiency of training the AI model by the GPU is low.

Based on this, an embodiment of this application provides a data processing method. The DPU 101 is used to process a service in cooperation with the model training processor 103, to improve training efficiency of processing the AI model on the compute node 1. During specific implementation, when processing a model training service on the compute node 1, the DPU 101 may obtain image data (namely, a training sample of an AI model) that is stored in the storage device 104 and that is required for training the AI model. The image data includes a plurality of encoded images. Operations of processing the image data include a plurality of operations. The plurality of operations may be divided into an image processing operation set performed by the DPU and a training operation set performed by the model training processor 103 (or the model training processor 103 and the CPU 102). The image processing operation set includes at least an image decoding operation, and the training operation set includes at least a model training operation. Then, the DPU 101 may perform an operation in the image processing operation set on the obtained image data, to obtain model training data, and output the model training data. In this way, the model training processor 103 may continue to perform an operation in the training operation set on the model training data, to train the AI model. Alternatively, the CPU 102 and the model training processor 103 sequentially perform different operations in the training operation set for the model training data, to train the AI model.

Usually, the model training processor 103 is mainly good at performing the model training operation in the training operation set, and is not good at performing an operation, for example, image decoding. Therefore, a speed of performing the image decoding (and performing another operation) on the image data by using the DPU 101 is faster than a speed of performing the image decoding (and performing the another operation) by using the model training processor 103. Therefore, the DPU 101 can be used to improve efficiency of processing the model training service and accelerate training of the AI model on the compute node 1. In addition, the DPU 101 is used to perform operations such as the image decoding on the image data, to reduce occupation of limited memory space of the model training processor 103 by temporary data generated in a process of training the AI model, so that the model training processor 103 can have abundant memory space to train the AI model. Therefore, training efficiency of the AI model can be improved, and overall efficiency of processing the model training service on the compute node 1 can be improved.

Processing of the model training service by the CPU 102 by using the GPU is still used as an example. The DPU 101 may read, from the storage device 104, image data required for training an AI model, and sequentially perform a decoding operation, a resize (resize) operation, a data enhancement operation, and the like (where these operations are operations in the foregoing image processing operation set) on the image data in a memory of the DPU 101, to obtain model training data. Then, the DPU 101 may output the model training data to the GPU. The GPU may store the model training data in a local memory, and train the AI model by using the model training data. In this way, in a process of processing the AI model training service, memory space occupied by temporary data generated by separately performing the decoding operation, the resize operation, and the data enhancement operation on the image data is memory space of the DPU. Therefore, even if space of the local memory of the GPU is limited, the GPU can also have abundant memory space to store the model training data (namely, data obtained by performing the data enhancement operation) output by the DPU 101, so that the GPU can use a larger batch size to perform iterative training on the AI model, to accelerate training of the AI model. In addition, in a process of performing the iterative training on the AI model a plurality of times, the GPU may directly read the model training data from the memory of the DPU 101. Therefore, there is no need to repeatedly perform operations of reading the image data that is in the storage device 104 and that is used as the training sample, and performing decoding, resizing, and data enhancement on the image data. This not only can reduce resource consumption, but also can further improve efficiency of processing the AI model training service. In addition, when the GPU trains the AI model by using a batch size of training samples, the DPU 101 may concurrently perform operations such as decoding, resizing, and data enhancement on other image data, so that the GPU can obtain a next batch size of training samples in a timely manner after competing one AI model process, to continue training the AI model. Therefore, training efficiency of the AI model can be further improved, and an input/output bound (I/O bound) and a computing power bound for training the AI model by the GPU can be eliminated.

It should be noted that the system architecture shown in FIG. 1a is merely used as an example, and is not intended to limit a specific implementation of the system architecture to the example. For example, in a data processing system 100 shown in FIG. 1b, a DPU 101 and a model training processor 103 are different chips on one training card 200, and a CPU and the training card 200 can perform data communication on the training card 200. On the training card 200, the DPU 101 may be connected to the model training processor 103 through an on-chip bus. For another example, a compute node 1 in FIG. 1 may also include a larger quantity or more types of model training processors. For still another example, the DPU 101 may be connected to a plurality of compute nodes at the same time, to accelerate processing of model training services for the plurality of compute nodes. This is not limited in this embodiment.

In addition, the data processing system 100 that includes the DPU 101, the CPU 102, the model training processor 103, and a storage device 104 is applicable to a centralized storage application scenario or a distributed storage application scenario.

In the centralized storage application scenario, one or more compute nodes may form a central node, and all data processing services of the entire data processing system 100 are deployed on the central node in a centralized manner. In this case, a disk and controller separation architecture may be used between the compute node 1 and the storage device 104. In other words, the compute node 1 and the storage device 104 are independently deployed. Alternatively, a disk and controller integration architecture may be used between the compute node 1 and the storage device 104. To be specific, the compute node 1 may have a slot, and the storage device 104 is placed in the compute node 1 through the slot, and is integrated with the compute node 1.

In the distributed storage application scenario, data in the data processing system 100 may be stored in a plurality of independent storage devices 104 in a distributed manner. In this case, the compute node 1 may be integrated with the storage devices 104, so that the compute node has both a computing capability and a storage capability. In addition, a virtual machine may be created on the compute node 1, or no virtual machine may be created. Alternatively, a decoupled storage and compute architecture may be used between the compute node 1 and the storage devices 104. To be specific, the compute node 1 and the storage devices 104 are independently deployed and communicate with each other via a network. In addition, the storage device 104 may include one or more different storage media. This is not limited in this embodiment.

To make the objectives, features, and advantages of this application clearer and more comprehensible, the following describes various non-limitative implementations in embodiments of this application with reference to the accompanying drawings by using examples. It is clear that the described embodiments are a part rather than all of embodiments of this application. All other embodiments obtained based on embodiments in this application and based on the foregoing content fall within the protection scope of this application.

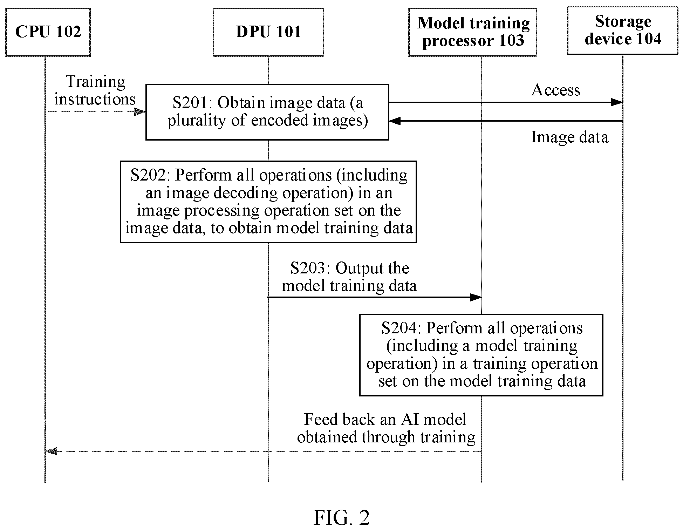

FIG. 2 is a schematic flowchart of a data processing method according to an embodiment of this application. The method may be applied to the data processing system 100 shown in FIG. 1a or FIG. 1b. During actual application, the method may also be applied to another applicable data processing system. For ease of understanding and description, an example in which the method is applied to the data processing system 100 shown in FIG. 1a is used below for description. The method may specifically include the following steps.

S201: The DPU 101 accesses the storage device 104 to obtain image data used for training an AI model. The image data includes a plurality of encoded images.

In this embodiment, the storage device 104 may store image data that is used as an AI model training sample. The image data is used to train one or more AI models such as a target recognition model and a face detection model on the compute node 1. Therefore, when processing a model training service, the DPU 101 may access the storage device 104 to obtain the image data that is stored in the storage device 104 and that is used to train the AI model.

In an implementation example, the DPU 101 may access the storage device 104 under control of the CPU 102. During specific implementation, the CPU 102 may provide a client externally. For example, the client may be a web browser, or may be an application (application) running on a user side, to implement interaction with a user. Therefore, the CPU 102 may receive, via the client, indication information of the user for training the AI model. Then, the CPU 102 may determine, based on the indication information, a storage location that is of the image data used for training the AI model and that is in the storage device 104, and generate a training instruction including the storage location, so that the CPU 102 may deliver the training instruction to the DPU 101. In this way, in response to the training instruction, the DPU 101 accesses the storage device 104 based on the storage location in the training instruction, to obtain the image data. During actual application, the DPU 101 may also be triggered to access the storage device 104 in another manner. This is not limited in this embodiment.

S202: The DPU 101 performs an operation in an image processing operation set on the image data obtained through accessing, to obtain model training data. Operations of processing the image data include the operation in the image processing operation set and an operation in a training operation set. In addition, the image processing operation set includes at least an image decoding operation, and the training operation set includes at least a model training operation.

S203: The DPU 101 outputs the model training data to the model training processor 103.

The image data obtained by the DPU 101 is usually a plurality of images (usually referred to as encoded images) on which encoding (encode) processing has been performed. Therefore, in a process of training the AI model by using the image data, operations performed on the image data may include the image decoding operation, the model training operation, and the like. The image decoding operation is used to decode the plurality of encoded images, to usually obtain data in a matrix form. In some application scenarios, the model training processor 103 may directly use the data in the matrix form as an input of the AI model to train the AI model (namely, perform the model training operation).

Further, in addition to the image decoding operation and the model training operation, the operations performed on the image data may further include an image data transformation operation. For example, the image data transformation operation may be one or more of a center crop (center crop) operation, a resize operation, a data enhancement operation, and a normalization (normalize) operation, or may be another type of operation. The center crop operation means that the image data (or the matrix data obtained by decoding the image data) is cropped to image data of a preset size, to meet a size requirement of the image data in the model training service. The resize operation means that the image data (or the matrix data obtained by decoding the image data) is scaled, to resize the image data. The data enhancement operation means that a size change, a pixel value change, a view angle change, or the like (for example, image reversion, rotation, translation, and scaling) is performed on the image data (or the matrix data obtained by decoding the image data), to enrich the training sample of the AI model. The normalization operation means that data of each color channel in the image data (or the matrix data obtained by decoding the image data) is normalized. For example, an average pixel value of each color channel is subtracted from a pixel value of each pixel on the color channel to obtain a result, and the result is divided by a variance of the pixel value of the color channel.

In this embodiment, the plurality of operations performed on the image data may be pre-divided into an operation performed by the DPU 101 and an operation performed by another processor (for example, the model training processor 103). For ease of differentiation, in the following descriptions, the operation performed by the DPU 101 in the plurality of operations is classified into the image processing operation set, and the operation performed by the another processor is classified into the training operation set. In this case, after obtaining the image data, the DPU 101 may perform the operation in the image processing operation set on the image data, and generate corresponding data. For ease of differentiation, the data is referred to as model training data below. In an example, the plurality of operations performed on the image data include the image decoding operation and the model training operation. In this case, after the DPU 101 performs the image decoding operation on the image data, the obtained matrix data is the model training data. Then, the model training processor 103 may perform the model training operation on the model training data. Specifically, the model training data may be used as the input of the AI model to train the AI model.

In another example, in addition to the image decoding operation and the model training operation, the plurality of operations performed on the image data further include the image data transformation operation such as one or more of the foregoing center crop operation, resize operation, data enhancement operation, and normalization operation.

In this case, a quantity of operations that need to be performed by the DPU 101 may be determined based on computing power of the DPU 101. For example, it is assumed that the plurality of operations performed on the image data include the image decoding operation, the resize operation, the data enhancement operation, and the model training operation. When a computing capability of the DPU 101 is strong and there are a large quantity of memory resources, it indicates that the computing power of the DPU 101 is strong. In this case, the image decoding operation, the resize operation, and the data enhancement operation may be classified into the image processing operation set performed by the DPU 101, and the model training operation is classified into the training operation set performed by the model training processor 103, to reduce computing load of the model training processor 103. Correspondingly, the image processing operation set includes a plurality of types of operations. After sequentially performing the image decoding operation, the resize operation, and the data enhancement operation based on the image data, the DPU 101 may obtain the model training data that is output to the model training processor 103. However, when the computing capability of the DPU 101 is weak or there are a small quantity of memory resources, it indicates that the computing power of the DPU 101 is poor. In this case, the image decoding operation and the resize operation may be classified into the image processing operation set, and the data enhancement operation and the model training operation may be classified into the training operation set. Based on the computing power of the DPU 101, the computing load of the model training processor 103 is reduced as much as possible.

Alternatively, the quantity of operations that need to be performed by the DPU 101 may be determined based on current load of the model training processor 103 (where for example, the model training processor 103 may train a plurality of AI models at the same time). For example, when the load of the model training processor 103 is heavy, the DPU 101 may perform the image decoding operation, the resize operation, and the data enhancement operation, and the model training processor 103 performs the model training operation, to reduce an amount of calculation required by the model training processor 103 in a process of training the AI models. In this way, excessive load of the model training processor 103 can be avoided. However, when the load of the model training processor 103 is light, the DPU 101 may perform only the image decoding operation or may perform only the image decoding operation and the resize operation, and the model training processor 103 performs another remaining operation. In this way, resource utilization of the model training processor 103 can reach a high level, to prevent resources from being wasted because excessive resources on the model training processor 103 are in idle state.

It should be noted that the foregoing implementation examples are merely used as examples for description. In another embodiment, the plurality of operations that need to be performed on the image data may also be classified into the image processing operation set and the training operation set based on another basis. This is not limited in this embodiment.

S204: The model training processor 103 performs the operation in the training operation set on the model training data.

In this embodiment, the DPU 101 and the model training processor 103 process the model training service in a cooperative manner. Therefore, after the DPU 101 outputs the model training data, the model training processor 103 may continue to process the model training data, to complete processing of the model training service.

Specifically, when the training operation set includes only the model training operation, the model training processor 103 may directly perform model training based on the model training data output by the DPU 101. Specifically, the model training data may be input to the AI model, and a parameter in the AI model is updated based on an inference result output by the AI model, to complete one training process of the AI model. When the training operation set includes the image data transformation operation and the model training operation, the model training processor 103 may first perform the image data transformation operation on the model training data, to obtain temporary data. Then, the model training processor 103 performs the model training operation based on the temporary data, to train the AI model.

In a further implementation, after the model training processor 103 completes training of the AI model based on the model training data, if a trained AI model meets a model training termination condition, for example, a quantity of times of iterative training reaches a preset quantity of times or the AI model is converged, the model training processor 103 may further return the trained AI model to the CPU 102, so that the CPU 102 feeds back the AI model to an upper-layer application or a client interacting with the CPU 102. Alternatively, the model training processor 103 may return the trained AI model to the DPU 101, so that the DPU 101 sends the AI model to the storage device 104 for storage and the like. This is not limited in this embodiment.

In an actual application scenario, when the model training processor 103 feeds back the AI model to the CPU 102, the CPU 102 may write the AI model into a local storage area, for example, stored in a hard disk on the compute node 1. When the model training processor 103 feeds back the AI model to the DPU 101, if the DPU 101 performs data communication with the storage device 104 via a wired network or a wireless network, the DPU 101 may generate a corresponding file based on the AI model, and send the file to a remote storage device 104 through a network interface on the DPU 101, so that the AI model may be stored in the storage device 104 in a file format. Alternatively, after the DPU 101 sends the AI model to the remote storage device 104, the storage device 104 may store the AI model in a key-value pair form. The key is a key created by the storage device 104, and the value is the AI model. If the DPU 101 establishes a connection to the storage device 104 through a PCIe bus or in another manner, the DPU 101 may send the AI model to the local storage device 104 in the file format or the KV format.

Because the DPU 101 performs a part of operations that need to be performed to process the image data, for example, the image decoding, operations that need to be performed by the model training processor 103 can be reduced. This can accelerate processing of the model training service data by using hardware of the DPU 101. In addition, the model training data generated when the DPU 101 performs the operation in the image processing operation set occupies the memory space of the DPU 101. Therefore, even if space of a local memory of the model training processor 103 is limited, the model training processor 103 can also have abundant memory space to train the AI model based on the model training data, so that efficiency of training the AI model by the model training processor 103 is not affected by limited memory space of the model training processor 103, to accelerate the training of the AI model. In addition, the model training data generated by the DPU 101 may be stored in the memory space of the DPU 101, so that when the model training processor 103 requires the model training data again (for example, performs iterative training on the AI model by repeatedly using a same dataset), the data may be directly read from the memory space of the DPU 101. The DPU 101 does not need to reread the image data from the storage device 104 and perform operations such as the image decoding again, so that the training of the AI model can be further accelerated.

In the foregoing embodiment, an example in which the DPU 101 and the model training processor 103 jointly process the model training service is used for description. During actual application, when computing power required for processing the model training service is high, comprehensive computing power of the DPU 101, the CPU 102, and the model training processor 103 may be combined to accelerate training of an AI model. The following describes a process of processing a model training service by using the DPU 101, the CPU 102, and the model training processor 103 with reference to the accompanying drawings.

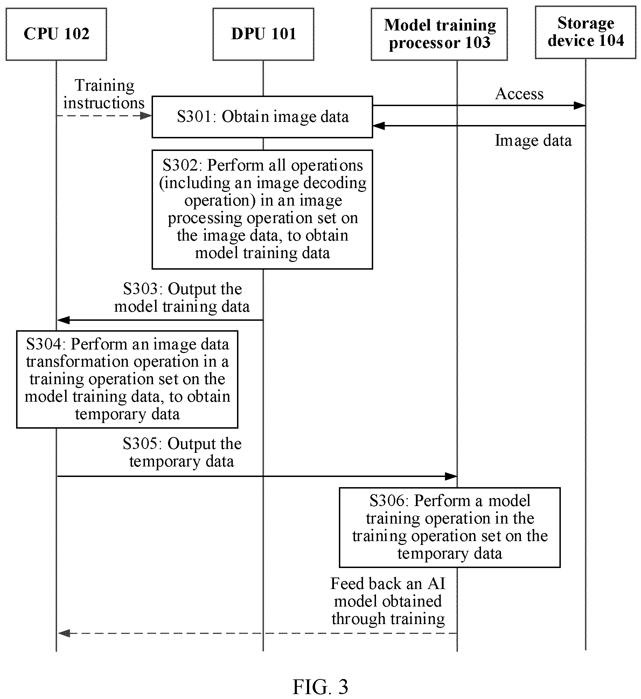

FIG. 3 is a schematic flowchart of another data processing method according to an embodiment of this application. As shown in FIG. 3, the method may specifically include the following steps.

S301: ADPU 101 accesses a storage device 104 to obtain image data used for training an AI model. The image data includes a plurality of encoded images.

S302: The DPU 101 performs an operation in an image processing operation set on data that is of a model training service and that is obtained through accessing, to obtain model training data. Operations of processing the image data include the operation in the image processing operation set and an operation in a training operation set. In addition, the image processing operation set includes at least an image decoding operation, and the training operation set includes at least an image data transformation operation and a model training operation.

In this embodiment, for specific implementations of step S301 and step S302, refer to the related descriptions of step S201 and step S202 in the foregoing embodiment. Details are not described herein again.

S303: The DPU 101 outputs the model training data to a CPU 102.

In this embodiment, after the DPU 101 outputs the model training data, the CPU 102 may continue to process the model training data.

S304: The CPU 102 performs the image data transformation operation in the training operation set on the model training data, to obtain temporary data.

S305: The CPU 102 outputs the temporary data to a model training processor 103.

The image data transformation operation may be, for example, one or more of a center crop operation, a resize operation, a data enhancement operation, and a normalization operation. In addition, when the image data transformation operation includes a plurality of operations, the CPU 102 may sequentially perform the plurality of operations based on the model training data, to obtain the temporary data that is to be output to the model training processor 103.

S306: The model training processor 103 performs the model training operation in the training operation set on the temporary data.

Further, after the model training processor 103 completes the training of the AI model by using the temporary data, if the AI model meets a model training termination condition, for example, a quantity of times of iterative training reaches a preset quantity of times or the AI model is converged, the model training processor 103 may further return a trained AI model to the CPU 102, so that the CPU 102 feeds back the AI model to an upper-layer application or a client interacting with the CPU 102. Alternatively, the model training processor 103 may return the trained AI model to the DPU 101, so that the DPU 101 sends the AI model to the storage device 104 for storage and the like. This is not limited in this embodiment.

During actual application, whether computing power of the CPU 102 is combined to accelerate the training of the AI model is determined based on training services for different AI models.

For example, when a size of the AI model is small, computing power of the DPU 101 and the model training processor 103 is abundant to meet computing power required for training the AI model. Therefore, only the DPU 101 and the model training processor 103 may be used to train the AI model, and training efficiency of the AI model can reach a high level.

When the size of the AI model is large, computing power required for training the AI model is high. In this case, computing power of the DPU 101, the CPU 102, and the model training processor 103 may be combined to accelerate the training of the AI model. In this way, training efficiency of the AI model can reach a high level.

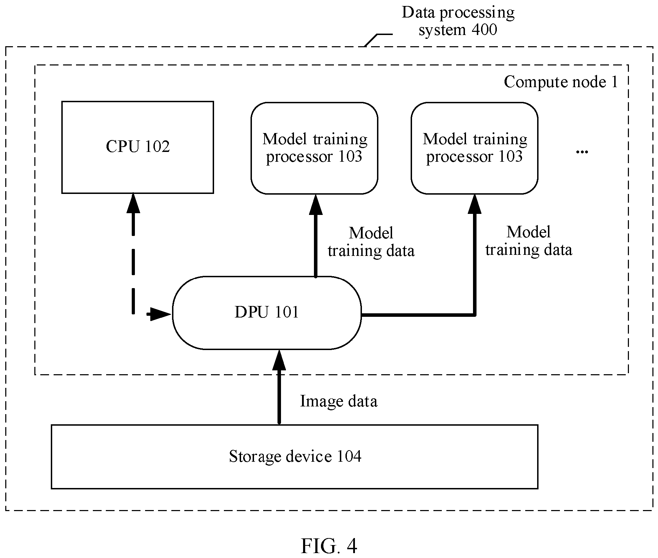

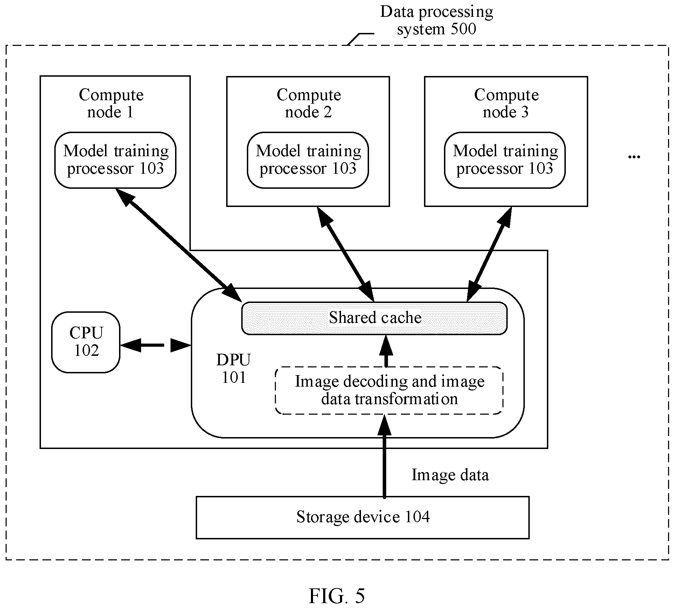

In the embodiments shown in FIG. 2 and FIG. 3, an implementation process in which the DPU 101 (and the CPU 102) is used to assist the model training processor 103 in accelerating the training of the AI model is mainly described. During actual application, when the computing power of the DPU 101 is high, the DPU 101 may provide a service of accelerating training of AI models for a plurality of model training processors 103. The DPU 101, the CPU 102, and the plurality of model training processors 103 may be deployed on a same compute node. As shown in FIG. 4, in this case, the DPU 101 may be coupled to the plurality of model training processors 103 in the compute node through a system bus, and provide model training data for the plurality of model training processors 103. Alternatively, the DPU 101, the CPU 102, and the plurality of model training processors 103 may be deployed on different compute nodes. As shown in FIG. 5, the DPU 101, the CPU 102, and at least one model training processor 103 are deployed on a compute node 1. The remaining model training processors 103 may be separately deployed on a compute node 2 and a compute node 3, and the compute node 2 and the compute node 3 each further include a CPU and other hardware (not shown in FIG. 5). In this case, the DPU 101 may be coupled to the plurality of model training processors 103 in a plurality of compute nodes through at least one of a PCIe bus, a CXL bus, and an NVMe bus (or another bus). In addition, the plurality of model training processors 103 may be processors of a same type, for example, all GPUs. Alternatively, the plurality of model training processors 103 may include a plurality of different types of processors, such as a GPU, an NPU, and a TPU.

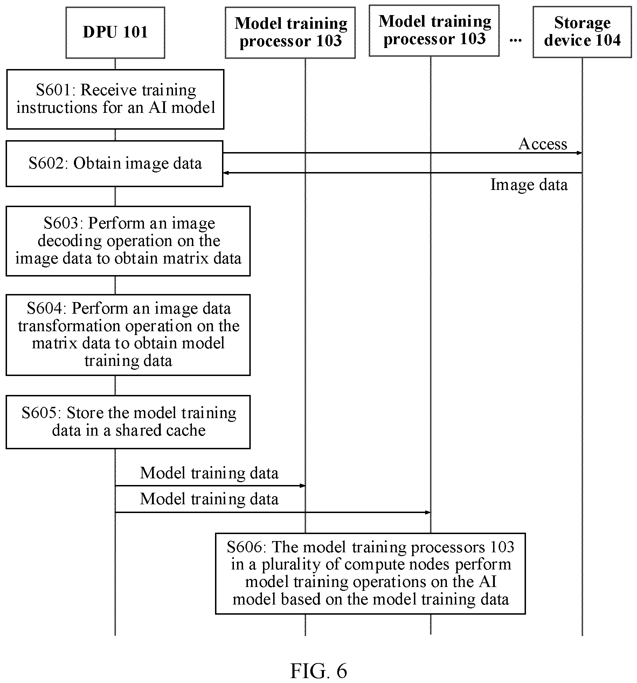

With reference to the system architecture shown in FIG. 5, an example is used to describe still another data processing method provided in an embodiment of this application. Refer to FIG. 6. The method may specifically include the following steps.

S601: The DPU 101 receives training instructions for an AI model.

S602: The DPU 101 obtains, from the storage device 104 based on the training instructions, image data that is used as a model training sample, where the image data includes a plurality of encoded images.

In the system architecture shown in FIG. 5, a CPU on any compute node may deliver the training instructions to the DPU 101. Alternatively, the plurality of compute nodes shown in FIG. 5 may include an agent node, and the agent node may be responsible for interacting with the outside of the system, for example, may receive indication information that is used to train the AI model and that is delivered by a user via a client, and present a trained AI model to the client, so that a CPU in the agent node delivers the training instructions to the DPU 101.

In this embodiment, the model training processors 103 in the plurality of compute nodes may implement distributed training on a same AI model, or different model training processors 103 are responsible for training different AI models. Correspondingly, the training instructions received by the DPU 101 may indicate to use heterogeneous processors on the plurality of compute nodes, so that the DPU 101 provides, for the plurality of heterogeneous processors indicated by the training instructions, image data on which an image data transformation operation has been performed. In addition, the training instructions may further indicate a storage location that is on the storage device 104 and that is of the image data used as the AI model training sample, so that the DPU 101 obtains the image data through accessing based on the storage location in the training instructions.

S603: The DPU 101 performs an image decoding operation on the obtained image data to obtain matrix data.

S604: The DPU 101 performs image data transformation operations such as a resize operation and a data enhancement operation on the matrix data, to obtain model training data (namely, matrix data on which the image data transformation operations have been performed).

In this embodiment, for specific implementation processes of step S603 and step S604, refer to the related descriptions in the foregoing embodiment. Details are not described herein again.

S605: The DPU 101 stores the model training data to a shared cache in the DPU 101.

In this embodiment, the shared cache may be configured in the DPU 101, and the shared cache may be accessed by the plurality of compute nodes. In this way, after the DPU 101 writes the matrix data on which the image data transformation operations have been performed into the shared cache, the model training processors 103 in the plurality of compute nodes may obtain, from the shared cache, the matrix data that is used as a model input.

Alternatively, in another possible embodiment, the DPU 101 may send, to the compute nodes one by one, the matrix data on which the image data transformation operations have been performed, so that the model training processors 103 in the compute nodes obtain the matrix data on which the image data transformation operations have been performed. In this embodiment, a specific implementation in which the model training processors 103 in the compute nodes obtain the matrix data on which the image data transformation operations have been performed is not limited. S606: The model training processors 103 in the plurality of compute nodes perform training operations on the AI model based on the matrix data in the shared cache, to complete a training service of the AI model.

In this way, the DPU 101 is used to perform the image decoding operation and the image data transformation operations on the image data. This can reduce time consumed by performing the operations. In addition, memory space occupied by temporary data generated by performing the operations is memory space of the DPU 101. Therefore, even if space of local memories of the model training processors 103 in the compute nodes is limited, the model training processors 103 can have abundant memory space to store the matrix data provided by the DPU 101 and train the AI model by using the matrix data. Therefore, the model training processors 103 may perform iterative training on the AI model by using a larger batch size, to accelerate the training of the AI model.

In addition, the model training data generated by performing the image decoding operation and the image data transformation operations on the image data may be stored in the shared cache of the DPU 101. In this way, in a process of performing the iterative training on the AI model by the model training processors 103 in the compute nodes, the model training processors 103 may directly read the model training data from the shared cache of the DPU 101 in each round of iteration. The DPU 101 does not need to repeatedly read the image data from the storage device 104 and perform the image decoding and the image data transformation operations on the image data a plurality of times. This can not only reduce resource consumption, but also accelerate efficiency of processing the training service of the AI model.

In addition, when an amount of the image data is large, the DPU 101 may read the image data in batches and perform a corresponding image decoding operation and a corresponding image data transformation operation. In this way, when the model training processor 103 trains the AI model by using matrix data corresponding to a current batch of image data, the DPU 101 may continue to read a next batch of image data from the storage device 104, and perform the image decoding and the image data transformation operations, so that after completing one AI model process, the model training processor 103 can obtain the next batch of model training data in a timely manner to continue training the AI model. Therefore, the image decoding operation, the image data transformation operations, and the model training operation are performed concurrently, so that training efficiency of the AI model can be further accelerated.

It should be noted that, the data processing method shown in FIG. 6 is merely used as an example, and is not used to limit a process in which the DPU 101 provides accelerated training of an AI model for one or more model training processors 103.

For example, in another possible embodiment, a plurality of model training processors 103 may be deployed on a same compute node, so that matrix data in a shared cache of a DPU 101 may be allowed to be accessed by the plurality of model training processors 103, to provide a service of accelerating training of an AI model for the plurality of model training processors 103.

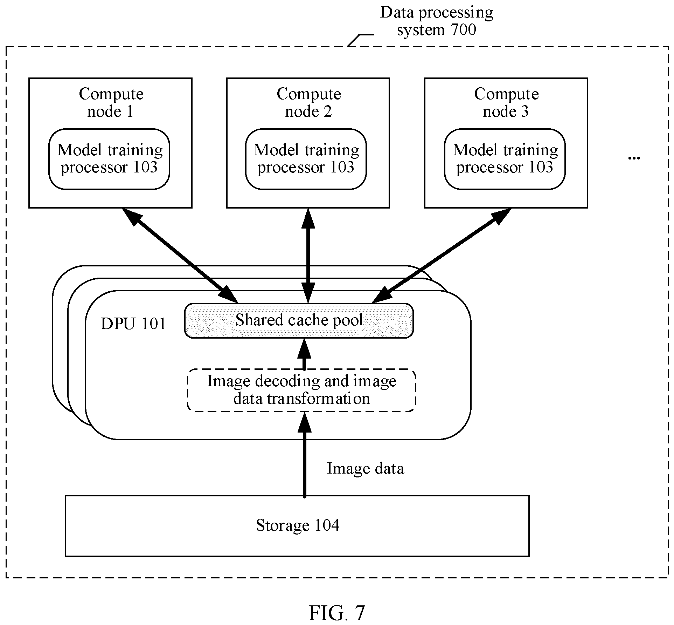

For another example, in a data processing system 700 shown in FIG. 7, a shared cache pool having larger storage space may be constructed based on a plurality of DPUs 101. The shared cache pool may include shared caches in the plurality of DPUs 101. After performing an image decoding operation (and an image data transformation operation) on obtained image data, any DPU 101 may write obtained model training data into the shared cache pool for storage, and support model training processors 103 in a plurality of compute nodes in accessing the model training data in the shared cache pool. In this way, computing power of the model training processors 103 is further increased based on the plurality of DPUs 101, to further improve training efficiency of an AI model. The data processing system 700 shown in FIG. 7 is described by using an example in which the DPU is deployed independently of the compute node. In another possible implementation, each compute node may include a CPU, a model training processor, and at least one DPU. Therefore, an AI model training process of each model training processor 103 may be further accelerated based on computing power provided by the plurality of DPUs in the plurality of compute nodes. In addition, the shared cache pool can be constructed across the compute nodes based on the caches in the plurality of DPUs. Alternatively, the plurality of DPUs 101 shown in FIG. 7 may be located on a same compute node, for example, all located on a compute node 1. Therefore, the plurality of DPUs 101 in the compute node 1 may be used to not only can accelerate an AI model training process of the compute node 1, but also can provide, via a shared cache pool, a service of accelerating training of an AI model for a compute node 2 and a compute node 3.

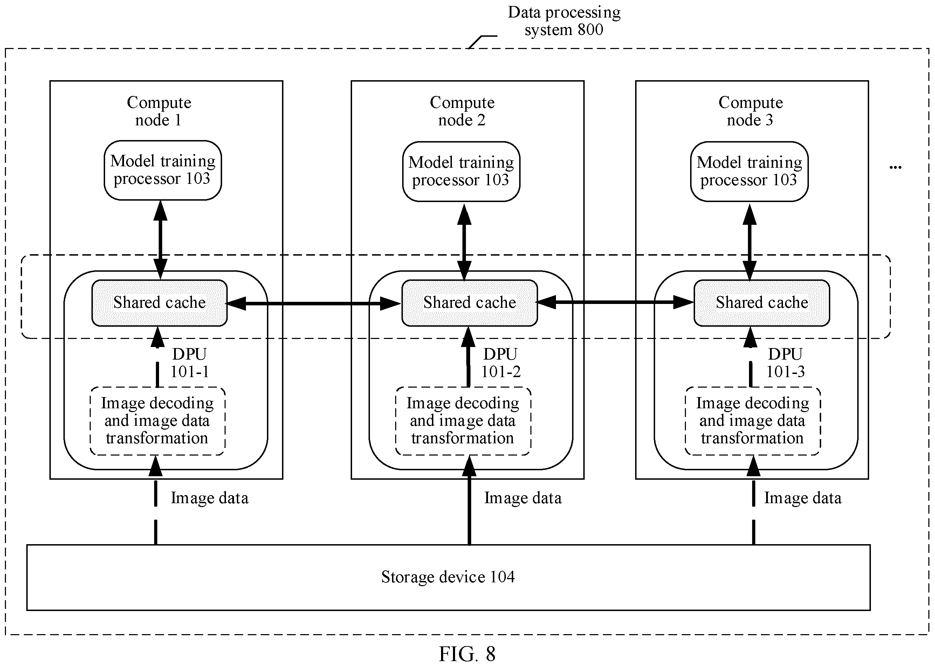

For still another example, in a data processing system 800 shown in FIG. 8, each DPU 101 may be responsible for providing a service of accelerating training of an AI model for at least one model training processor 103. For example, a DPU 101-1 is configured to provide the service for a model training processor 103 in a compute node 1, a DPU 101-2 is configured to provide the service for a model training processor 103 in a compute node 2, and a DPU 101-3 is configured to provide the service for a model training processor 103 in a compute node 3. In addition, different DPUs 101 may perform data exchange. In this way, after obtaining image data used for training the AI model and performing an image decoding operation and an image data transformation operation on the image data, the DPU 101-2 may share obtained model training data with the DPU 101-1 and the DPU 101-3. In this way, when the DPU 101-2 outputs the model training data to the model training processor 103 in the compute node 2 to train the AI model, the DPU 101-1 may output the model training data to the model training processor 103 in the compute node 1, and the DPU 101-3 may output the model training data to the model training processor 103 in the compute node 3, to accelerate training of the AI model in each compute node.

For still another example, in another possible data processing system, both a plurality of DPUs and a plurality of model training processors may be deployed on a same compute node, and each DPU may be responsible for providing a service of accelerating training of an AI model for at least one model training processor. For example, the data processing system includes a DPU 1, a DPU 2, a model training processor 1, and a model training processor 2. When providing the service of accelerating training of an AI model for the model training processor 1, the DPU 1 may perform operations such as image decoding (and image data transformation) on obtained image data, to obtain model training data. Then, the DPU 1 may output the model training data to the model training processor 1, so that the model training processor 1 trains the AI model based on the model training data. In addition, the DPU 1 may further output the model training data to the DPU 2, and the DPU 2 provides the model training data to the model training processor 2, so that the model training processor 2 can also train an AI model on the model training processor 2 based on the model training data. Certainly, the data processing system further includes hardware such as a CPU. Details are not described herein again.

The data processing systems shown in FIG. 4, FIG. 5, FIG. 7, and FIG. 8 are merely used as examples for description provided in embodiments of this application, and are not intended to limit a specific implementation of the data processing system.

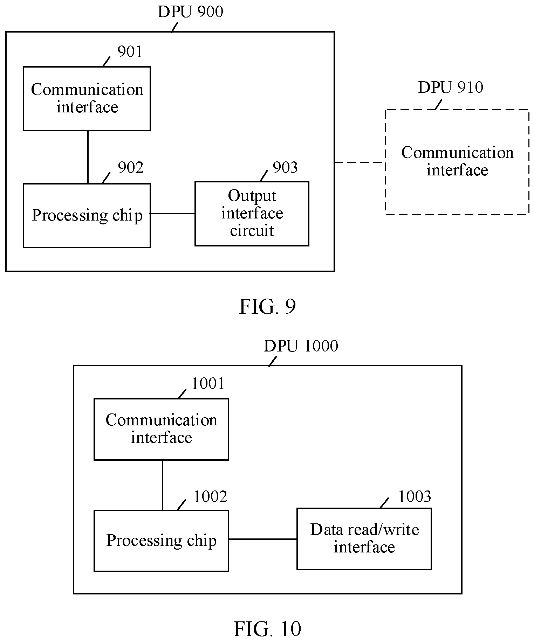

The foregoing describes in detail the data processing method provided in this application with reference to FIG. 1 to FIG. 8. The following separately describes, with reference to FIG. 9 to FIG. 12, a DPU and a chip system according to this application.

Same as the invention concept of the foregoing method, an embodiment of this application further provides a data processing apparatus. FIG. 9 is a schematic diagram of a structure of a DPU 900 according to an embodiment of this application. The DPU 900 shown in FIG. 9 may be, for example, the DPU 101 in each of the foregoing embodiments. The DPU 900 is separately coupled to a first CPU and a first model training processor through a system bus, or the DPU 900 and the first model training processor are different chips on one training card. As shown in FIG. 9, the DPU 900 includes:
a communication interface 901, configured to obtain image data, where the image data includes a plurality of encoded images;
a processing chip 902, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and
an output interface circuit 903, configured to output the model training data, where the model training data is used by the first model training processor to perform the operation in the training operation set, or the model training data is used by the first CPU and the first model training processor to perform the operation in the training operation set.

In a possible implementation, the image processing operation set further includes an image data transformation operation, and the processing chip 902 is configured to:
perform the image decoding operation on the image data to obtain matrix data; and
perform the image data transformation operation on the matrix data to obtain the model training data.

In a possible implementation, the training operation set further includes the image data transformation operation. The model training data is used by the first CPU to perform the image data transformation operation to obtain temporary data, and the temporary data is used by the first model training processor to perform the model training operation.

In a possible implementation, the communication interface 901 is configured to:
obtain an artificial intelligence AI model output by the first model training processor; and
send the AI model to a local or remote storage device, where the AI model is stored in the storage device in a file format or a key-value KV format.

In a possible implementation, the output interface circuit 903 is further configured to output the model training data to a DPU 910. The DPU 910 is separately coupled to a second CPU and a second model training processor through a system bus, or the DPU 910 and the second model training processor are different chips on one training card. The DPU 910 is configured to: receive the model training data; and output the model training data to the second model training processor, where the model training data is used by the second model training processor to perform the operation in the training operation set.

In addition, an embodiment of this application further provides another DPU, as shown in FIG. 10. The DPU 1000 shown in FIG. 10 is separately coupled to a central processing unit CPU and a plurality of model training processors through a system bus, or the DPU 1000 and the plurality of model training processors are different chips on one training card. The data processing apparatus 1000 includes:
a communication interface 1001, configured to obtain image data, where the image data includes a plurality of encoded images;
a processing chip 1002, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and
a data read/write interface 1003, configured to write the model training data into a shared cache that is accessed by the plurality of model training processors, where the model training data in the shared cache is used by the plurality of model training processors to perform the operation in the training operation set, or the model training data in the shared cache is used by the CPU and the plurality of model training processors to perform the operation in the training operation set.

In another embodiment, the DPU 1000 shown in FIG. 10 includes:
a communication interface 1001, configured to obtain image data, where the image data includes a plurality of encoded images;
a processing chip 1002, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and
a data read/write interface 1003, configured to write the model training data into a shared cache pool that is constructed based on caches in a plurality of DPUs, where the plurality of DPUs include the DPU 1000, and the model training data in the shared cache pool is used by the model training processor to perform the operation in the training operation set, or the model training data in the shared cache pool is used by the CPU and the model training processor to perform the operation in the training operation set.

Same as the invention concept of the foregoing method, an embodiment of this application further provides a data processing apparatus. The data processing apparatus is applied to a DPU, for example, the DPU 101 in each of the foregoing embodiments. The DPU is separately coupled to a CPU and a model training processor through a system bus, or the DPU and the model training processor are different chips on one training card. The data processing apparatus includes:
a communication module, configured to obtain image data, where the image data includes a plurality of encoded images;
a processing module, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and
an output module, configured to output the model training data, where the model training data is used by the model training processor to perform the operation in the training operation set, or the model training data is used by the CPU and the model training processor to perform the operation in the training operation set.

In a possible implementation, the image processing operation set further includes an image data transformation operation, and the processing module is configured to:
perform the image decoding operation on the image data to obtain matrix data; and
perform the image data transformation operation on the matrix data to obtain the model training data.

In a possible implementation, the training operation set further includes an image data transformation operation. The model training data is used by the CPU to perform the image data transformation operation to obtain temporary data, and the temporary data is used by the model training processor to perform the model training operation.

In a possible implementation, the communication module is configured to:
obtain an artificial intelligence AI model output by the model training processor; and
send the AI model to a local or remote storage device, where the AI model is stored in the storage device in a file format or a key-value KV format.

In a possible implementation, the output module is further configured to output the model training data to another DPU. The another DPU is separately coupled to another CPU and another model training processor through a system bus, or the another DPU and the another model training processor are different chips on one training card. The another DPU is configured to: receive the model training data; and output the model training data to the another model training processor. The model training data is used by the another model training processor to perform the operation in the training operation set.

In addition, an embodiment of this application further provides another data processing apparatus. The data processing apparatus is applied to a data processing unit DPU. The DPU is separately coupled to a central processing unit CPU and a plurality of model training processors through a system bus, or the DPU and the plurality of model training processors are different chips on one training card. The data processing apparatus includes:
a communication module, configured to obtain image data, where the image data includes a plurality of encoded images;
a processing module, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and
a data write module, configured to write the model training data into a shared cache that is accessed by the plurality of model training processors, where the model training data in the shared cache is used by the plurality of model training processors to perform the operation in the training operation set, or the model training data in the shared cache is used by the CPU and the plurality of model training processors to perform the operation in the training operation set.

In another embodiment, a data processing apparatus is applied to a target data processing unit DPU. The DPU is separately coupled to a central processing unit CPU and a model training processor through a system bus, or the target DPU and the model training processor are different chips on one training card. The data processing apparatus includes:
a communication module, configured to obtain image data, where the image data includes a plurality of encoded images;
a processing module, configured to perform an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and
a data write module, configured to write the model training data into a shared cache pool that is constructed based on caches in a plurality of DPUs, where the plurality of DPUs include the target DPU, and the model training data in the shared cache pool is used by the model training processor to perform the operation in the training operation set, or the model training data in the shared cache pool is used by the CPU and the model training processor to perform the operation in the training operation set.

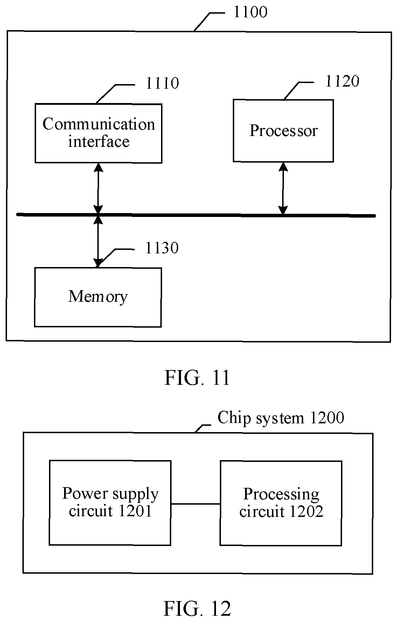

An embodiment of this application further provides a DPU. As shown in FIG. 11, the DPU 1100 may include a communication interface 1110 and a processor 1120. Optionally, the DPU 1100 may further include a memory 1130. The memory 1130 may be disposed inside the DPU 1100, or may be disposed outside the DPU 1100. For example, all actions performed by the DPU 101 in the embodiments shown in FIG. 3 and FIG. 4 may be implemented by the processor 1120. The processor 1120 may obtain image data through the communication interface 1110, and is configured to implement any one of the methods performed in FIG. 2, FIG. 3, and FIG. 6. In an implementation process, steps in a processing procedure may be performed by using an integrated logic circuit of hardware in the processor 1120 or instructions in a form of software, to complete the methods performed in FIG. 2, FIG. 3, and FIG. 6. For ease of brevity, details are not described herein again. Program code executed by the processor 1120 for implementing the foregoing method may store in the memory 1130. The memory 1130 is connected to the processor 1120, for example, in a coupling connection.

Some features of embodiments of this application may be implemented/supported by the processor 1120 by executing program instructions or software code in the memory 1130. Software components loaded to the memory 1130 may be summarized in terms of functions or logic, for example, the processing chip 902 and the output interface circuit 903 shown in FIG. 9, or the processing chip 1002 and the data read/write interface 1003 shown in FIG. 10. Functions of the communication interface 901 shown in FIG. 9 and the communication interface 1001 shown in FIG. 10 may be implemented by the communication interface 1110.

Any communication interface in embodiments of this application may be a circuit, a bus, a transceiver, or another apparatus that may be configured to exchange information, for example, the communication interface 1110 in the DPU 1100. For example, the another apparatus may be a device or the like connected to the DPU 1100.

The processor in embodiments of this application may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps in the methods disclosed with reference to embodiments of this application may be directly performed by a hardware processor, or may be performed by a combination of hardware and software modules in the processor.

The coupling in embodiments of this application is an indirect coupling or a communication connection between apparatuses or modules in an electrical form, a mechanical form, or another form, and is used for information exchange between the apparatuses or the modules.

The processor may cooperate with the memory. The memory may be a non-volatile memory, for example, a hard disk or a solid-state drive, or may be a volatile memory, for example, a random access memory. The memory is any other medium that can be used to carry or store expected program code in a form of an instruction or a data structure and that can be accessed by a computer, but is not limited thereto.

A specific connection medium between the communication interface, the processor, and the memory is not limited in embodiments of this application. For example, the memory, the processor, and the communication interface may be connected through a bus. The bus may be classified into an address bus, a data bus, a control bus, and the like.

An embodiment of this application further provides a chip system. As shown in FIG. 12, the chip system 1200 may include a power supply circuit 1201 and a processing circuit 1202. The power supply circuit 1201 is configured to supply power to the processing circuit 1202, and the processing circuit is configured to perform the following operation steps:
obtaining image data, where the image data includes a plurality of encoded images;
performing an operation in an image processing operation set on the image data to obtain model training data, where operations of processing the image data include the operation in the image processing operation set and an operation in a training operation set, the image processing operation set includes at least an image decoding operation, and the training operation set includes at least a model training operation; and
outputting the model training data, where the model training data is used by a model training processor to perform the operation in the training operation set, or the model training data is used by a CPU and the model training processor to perform the operation in the training operation set.

During actual application, the power supply circuit 1201 and the processing circuit 1202 may be located in a same chip, or the power supply circuit 1201 may be located in another chip other than a chip in which the processing circuit 1202 is located. The power supply circuit 1201 includes but is not limited to at least one of the following: a power supply subsystem, an electrical tube management chip, a power consumption management processor, or a power consumption management control circuit.

Based on the foregoing embodiments, an embodiment of this application further provides a computer storage medium. The storage medium stores a software program. When the software program is read and executed by one or more processors, the method performed by the data processing system 100 provided in any one or more of the foregoing embodiments may be implemented. The computer storage medium may include any medium that can store program code, such as a removable hard disk, a read-only memory, a random access memory, a magnetic disk, or an optical disc.

A person skilled in the art should understand that embodiments of this application may be provided as a method, an apparatus, a system, a storage medium, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances. This is merely a distinguishing manner that is used when objects having a same attribute are described in embodiments of this application.

It is clear that a person skilled in the art can make various modifications and variations to embodiments of this application without departing from the scope of embodiments of this application. This application is intended to cover these modifications and variations provided that they fall within the scope of protection defined by the claims and their equivalent technologies.

## Claims

1. A data processing method, wherein a data processing unit DPU is separately coupled to a central processing unit CPU and a model training processor through a system bus, or the DPU and the model training processor are different chips on one training card, and the method comprises:
obtaining, by the DPU, image data, wherein the image data comprises a plurality of encoded images;
performing, by the DPU, an operation in an image processing operation set on the image data to obtain model training data, wherein operations of processing the image data comprise the operation in the image processing operation set and an operation in a training operation set, the image processing operation set comprises at least an image decoding operation, and the training operation set comprises at least a model training operation; and
outputting, by the DPU, the model training data, wherein the model training data is used by the model training processor to perform the operation in the training operation set, or the model training data is used by the CPU and the model training processor to perform the operation in the training operation set.

2. The method according to claim 1, wherein the DPU comprises a network interface, and the obtaining, by the DPU, image data specifically comprises:
obtaining, by the DPU, the image data via a wired network or a wireless network.

3. The method according to claim 2, wherein the wired network is an Ethernet or a wireless bandwidth network.

4. The method according to any one of claims 1 to 3, wherein the DPU is connected to a storage device, and the obtaining, by the DPU, image data specifically comprises:
obtaining, by the DPU, the image data from the storage device.

5. The method according to claim 4, wherein the storage device comprises:
one or more of a hard disk drive HDD, a flash media drive, shingled magnetic recording SMR, a storage array, or a storage server.

6. The method according to claim 4 or 5, wherein a communication protocol between the storage device and the DPU comprises one or more of a small computer system interface SCSI protocol, a serial attached small computer system interface SAS protocol, a peripheral component interconnect express PCIe protocol, a universal serial bus USB protocol, and a non-volatile memory express NVMe protocol.

7. The method according to any one of claims 1 to 6, wherein the DPU, the CPU, and the model training processor are located on a same server.

8. The method according to any one of claims 1 to 7, wherein the model training processor is one or more of a graphics processing unit GPU, a neural network processing unit NPU, and a tensor processing unit TPU.

9. The method according to any one of claims 1 to 8, wherein the system bus comprises one or more of a peripheral component interconnect express PCIe bus, a compute express link CXL bus, and a non-volatile memory express NVMe bus.

10. The method according to any one of claims 1 to 9, wherein the image processing operation set further comprises an image data transformation operation, and the performing, by the DPU, an operation in an image processing operation set on the image data to obtain model training data comprises:
performing, by the DPU, the image decoding operation on the image data to obtain matrix data; and
performing, by the DPU, the image data transformation operation on the matrix data to obtain the model training data.

11. The method according to any one of claims 1 to 9, wherein the training operation set further comprises an image data transformation operation, the model training data is used by the CPU to perform the image data transformation operation to obtain temporary data, and the temporary data is used by the model training processor to perform the model training operation.

12. The method according to any one of claims 1 to 11, wherein the method further comprises:
obtaining, by the DPU, an artificial intelligence AI model output by the model training processor; and
sending, by the DPU, the AI model to a local or remote storage device, wherein the AI model is stored in the storage device in a file format or a key-value KV format.

13. The method according to any one of claims 1 to 12, wherein the outputting, by the DPU, the model training data comprises:
outputting, by the DPU, the model training data to another DPU, wherein
the another DPU is separately coupled to another CPU and another model training processor through a system bus, or the another DPU and the another model training processor are different chips on one training card, and the another DPU is configured to: receive the model training data, and output the model training data to the another model training processor, wherein the model training data is used by the another model training processor to perform the operation in the training operation set.

14. A data processing method, wherein a data processing unit DPU is separately coupled to a central processing unit CPU and a plurality of model training processors through a system bus, or the DPU and the plurality of model training processors are different chips on one training card, and the method comprises:
obtaining, by the DPU, image data, wherein the image data comprises a plurality of encoded images;
performing, by the DPU, an operation in an image processing operation set on the image data to obtain model training data, wherein operations of processing the image data comprise the operation in the image processing operation set and an operation in a training operation set, the image processing operation set comprises at least an image decoding operation, and the training operation set comprises at least a model training operation; and
writing, by the DPU, the model training data into a shared cache that is accessed by the plurality of model training processors, wherein the model training data in the shared cache is used by the plurality of model training processors to perform the operation in the training operation set, or the model training data in the shared cache is used by the CPU and the plurality of model training processors to perform the operation in the training operation set.

15. A data processing method, wherein a target data processing unit DPU is separately coupled to a central processing unit CPU and a model training processor through a system bus, or the target DPU and the model training processor are different chips on one training card, and the method comprises:
obtaining, by the target DPU, image data, wherein the image data comprises a plurality of encoded images;
performing, by the target DPU, an operation in an image processing operation set on the image data to obtain model training data, wherein operations of processing the image data comprise the operation in the image processing operation set and an operation in a training operation set, the image processing operation set comprises at least an image decoding operation, and the training operation set comprises at least a model training operation; and
writing, by the target DPU, the model training data into a shared cache pool that is constructed based on caches in a plurality of DPUs, wherein the plurality of DPUs comprise the target DPU, and the model training data in the shared cache pool is used by the model training processor to perform the operation in the training operation set, or the model training data in the shared cache pool is used by the CPU and the model training processor to perform the operation in the training operation set.

16. A first data processing unit DPU, wherein the first DPU is separately coupled to a first central processing unit CPU and a first model training processor through a system bus, or the first DPU and the first model training processor are different chips on one training card, and the first DPU comprises:
a communication interface, configured to obtain image data, wherein the image data comprises a plurality of encoded images;
a processing chip, configured to perform an operation in an image processing operation set on the image data to obtain model training data, wherein operations of processing the image data comprise the operation in the image processing operation set and an operation in a training operation set, the image processing operation set comprises at least an image decoding operation, and the training operation set comprises at least a model training operation; and
an output interface circuit, configured to output the model training data, wherein the model training data is used by the first model training processor to perform the operation in the training operation set, or the model training data is used by the first CPU and the first model training processor to perform the operation in the training operation set.

17. The first DPU according to claim 16, wherein the image processing operation set further comprises an image data transformation operation, and the processing chip is configured to:
perform the image decoding operation on the image data to obtain matrix data; and
perform the image data transformation operation on the matrix data to obtain the model training data.

18. The first DPU according to claim 16 or 17, wherein the training operation set further comprises the image data transformation operation, the model training data is used by the first CPU to perform the image data transformation operation to obtain temporary data, and the temporary data is used by the first model training processor to perform the model training operation.

19. The first DPU according to any one of claims 16 to 18, wherein the communication interface is configured to:
obtain an artificial intelligence AI model output by the first model training processor; and
send the AI model to a local or remote storage device, wherein the AI model is stored in the storage device in a file format or a key-value KV format.

20. The first DPU according to any one of claims 16 to 19, wherein the output interface circuit is further configured to output the model training data to a second DPU; and
the second DPU is separately coupled to a second CPU and a second model training processor through a system bus, or the second DPU and the second model training processor are different chips on one training card, and the second DPU is configured to:
receive the model training data; and
output the model training data to the second model training processor, wherein the model training data is used by the second model training processor to perform the operation in the training operation set.

21. A data processing unit DPU, wherein the DPU is separately coupled to a central processing unit CPU and a plurality of model training processors through a system bus, or the DPU and the plurality of model training processors are different chips on one training card, and the DPU comprises:
a communication interface, configured to obtain image data, wherein the image data comprises a plurality of encoded images;
a processing chip, configured to perform an operation in an image processing operation set on the image data to obtain model training data, wherein operations of processing the image data comprise the operation in the image processing operation set and an operation in a training operation set, the image processing operation set comprises at least an image decoding operation, and the training operation set comprises at least a model training operation; and
a data read/write interface, configured to write the model training data into a shared cache that is accessed by the plurality of model training processors, wherein the model training data in the shared cache is used by the plurality of model training processors to perform the operation in the training operation set, or the model training data in the shared cache is used by the CPU and the plurality of model training processors to perform the operation in the training operation set.

22. A target data processing unit DPU, wherein the target DPU is separately coupled to a central processing unit CPU and a model training processor through a system bus, or the target DPU and the model training processor are different chips on one training card, and the target DPU comprises:
a communication interface, configured to obtain image data, wherein the image data comprises a plurality of encoded images;
a processing chip, configured to perform an operation in an image processing operation set on the image data to obtain model training data, wherein operations of processing the image data comprise the operation in the image processing operation set and an operation in a training operation set, the image processing operation set comprises at least an image decoding operation, and the training operation set comprises at least a model training operation; and
a data read/write interface, configured to write the model training data into a shared cache pool that is constructed based on caches in a plurality of DPUs, wherein the plurality of DPUs comprise the target DPU, and the model training data in the shared cache pool is used by the model training processor to perform the operation in the training operation set, or the model training data in the shared cache pool is used by the CPU and the model training processor to perform the operation in the training operation set.

23. A data processing unit DPU, wherein the DPU is configured to perform the method performed by the DPU according to any one of claims 1 to 14.

24. A data processing system, wherein the data processing system comprises the DPU according to any one of claims 1 to 14, a CPU, and a model training processor.

25. A chip system, wherein the chip system comprises a power supply circuit and a processing circuit, the power supply circuit is configured to supply power to the processing circuit, and the processing circuit is configured to perform the method performed by the DPU according to any one of claims 1 to 14.

26. A computer-readable storage medium, comprising instructions, wherein the instructions are used to implement the method performed by the DPU according to any one of claims 1 to 14.

27. A computer program product comprising instructions, wherein when the computer program product runs on a data processing unit DPU, the DPU is enabled to perform the method performed by the DPU according to any one of claims 1 to 14.
